# EUROPEAN PATENT APPLICATION

(11) **EP 4 525 188 A2**
(43) Date of publication of application: **19.03.2025**
(21) Application number: 24195160.7
(22) Date of filing: 19.08.2024
(51) Int. Cl.: H01M 50/503, H01M 50/505, H01M 50/516

(54) **BUS BAR AND ELECTRIC STORAGE UNIT**

(30) Priority: 15.09.2023 JP 2023150514
(71) Applicant: Prime Planet Energy & Solutions, Inc., Chuo-ku, Tokyo 103-0022 (JP)
(72) Inventor: OSHIMA, Kazuki, Tokyo, 103-0022 (JP); WAKIMOTO, Ryoichi, Tokyo, 103-0022 (JP)
(74) Representative: Kuhnen & Wacker Patent- und Rechtsanwaltsbüro PartG mbB

(57) **Abstract**

A bus bar (1), comprising: a first joint area (10) for joining to a terminal part (144) of a first electric storage device (100A);
a second joint area (20) for joining to a terminal part (144) of a second electric storage device (100B) different from the first electric storage device (100A); and a cross-linked area (30) connecting the first joint area (10) and the second joint area (20), wherein on at least one of the first joint area (10) and the second joint area (20), a buffering part (22) is provided that is configured to absorb a stress caused by a fluctuation of an interval between the first joint area (10) and the second joint area (20).

## Description

### BACKGROUND

### 1. Technical Field

The present disclosure relates to a bus bar and an electric storage unit.

### 2. Description of the Related Art

The electric storage device, such as lithium ion secondary battery, is used as a power supply of various electric products. At that time, an electric storage unit might be constructed in which plural electric storage devices are connected by a bus bar. An example of this bus bar is disclosed in Japanese Application Publication 2020-021628. The bus bar described in the above cited document is a conductive member that is configured to couple plural terminals. This bus bar is configured with plural electrically conductive plates that are laminated, and includes a bent part that is disposed between plural connecting parts being connected to plural terminals and that is bent in a laminate direction of the electrically conductive plates. The bus bar configured as described above can follow a fluctuation of a distance between terminals caused by expansion and contraction of a single battery (the electric storage device), because the bent part is deformed when a stress is applied.

### SUMMARY

Anyway, a general bus bar is joined to a terminal part of the electric storage device by laser welding, resistance welding, or the like. Here, if the fluctuation of the distance between the terminals is caused by the expansion and contraction of the electric storage device, the stress might be applied not only on a bus bar main body, but also on a joint part with the bus bar and the terminal part. As described above, the bus bar described in Japanese Application Publication 2020-021628 can mitigate the stress applied onto the bus bar main body because of the bent part being present between 2 joint parts. However, in the bus bar configured as described above, it is difficult to mitigate the stress applied onto the joint part with the bus bar and the terminal part.

With respect to the above described issue, the bus bar including a below described configuration is provided.

A herein disclosed bus bar includes a first joint area for joining to a terminal part of a first electric storage device, a second joint area for joining to a terminal part of a second electric storage device different from the first electric storage device, and a cross-linked area connecting the first joint area and the second joint area. Then, on this bus bar, a buffering part is provided on at least one of the first joint area and the second joint area, which is configured to absorb a stress caused by a fluctuation of an interval between the first joint area and the second joint area.

Regarding the bus bar having the above described configuration, the buffering part is provided on at least one of the first j oint area and the second joint area, which is configured to absorb the stress caused by the fluctuation of the interval between the first joint area and the second joint area. By doing this, it is possible to suppress the stress caused by the fluctuation of the interval between the 2 joint areas from being applied onto the joint part between the bus bar and the terminal part.

### BRIEF DESCRIPTION OF THE DRAWINGS

FIG. 1 is a perspective view that schematically shows a bus bar in accordance with a first embodiment.
FIG. 2 is a cross section view that schematically shows a joint with the bus bar shown in FIG. 1 and a terminal part of an electric storage device.
FIG. 3 is a perspective view that schematically shows an electric storage unit in accordance with the first embodiment.
FIG. 4 is a perspective view that schematically shows an electric storage device shown in FIG. 3.
FIG. 5 is an enlarged cross section view that schematically shows a structure at a vicinity of a terminal attachment hole of the electric storage device shown in FIG. 4.
FIG. 6 is an enlarged cross section view that is to explain a procedure for manufacturing an insulating material shown in FIG. 5.
FIG. 7 is an enlarged cross section view that schematically shows a connection structure of the electric storage unit shown in FIG. 3.
FIG. 8 is a cross section view that schematically shows a joint with the bus bar and the terminal part of the electric storage device, in accordance with another embodiment.
FIG. 9 is a plane view of the bus bar in accordance with another embodiment.
FIG. 10 is a plane view of the bus bar in accordance with another embodiment.
FIG. 11 is a plane view of the bus bar in accordance with another embodiment.
FIG. 12 is an enlarged cross section view that schematically shows the structure of the electric storage device of the electric storage unit in accordance with another embodiment at the vicinity of the terminal attachment hole.
FIG. 13 is an enlarged cross section view that schematically shows the structure of the electric storage device of the electric storage unit in accordance with another embodiment at the vicinity of the terminal attachment hole.
FIG. 14 is an enlarged cross section view that schematically shows the structure of the electric storage device of the electric storage unit in accordance with another embodiment at the vicinity of the terminal attachment hole.
FIG. 15 is an enlarged cross section view that schematically shows a connection structure of the electric storage unit in accordance with another embodiment.
FIG. 16 is an enlarged cross section view that schematically shows the connection structure of the electric storage unit in accordance with another embodiment.

### DETAILED DESCRIPTION

Below, an embodiment of the herein disclosed technique would be explained while referring to figures. Incidentally, the matters being other than matters particularly mentioned in this specification and being required for practicing the present disclosure (for example, a detailed configuration of an electrode assembly, or the like) can be grasped as design matters of those skilled in the art based on the related art in the present field. The herein disclosed technique can be executed based on the contents disclosed in the present specification, and on the technical common sense in the present field. In addition, a wording "A to B" representing a range in the present specification semantically covers not only a meaning equal to or more than A and not more than B, but also meanings "more than A" and "less than B".

Incidentally, a term "electric storage device" in the present specification represents a concept semantically covering an apparatus in which, by moving a charge carrier between a pair of electrodes (a positive electrode and a negative electrode), a charge and discharge response is generated. In other words, the electric storage device on the herein disclosed technique semantically covers not only a secondary battery, such as lithium ion secondary battery, nickel hydrogen battery, and nickel cadmium battery, but also a capacitor, such as lithium ion capacitor, and electric double layer capacitor, or the like.

### <First embodiment>

### 1. Configuration of bus bar

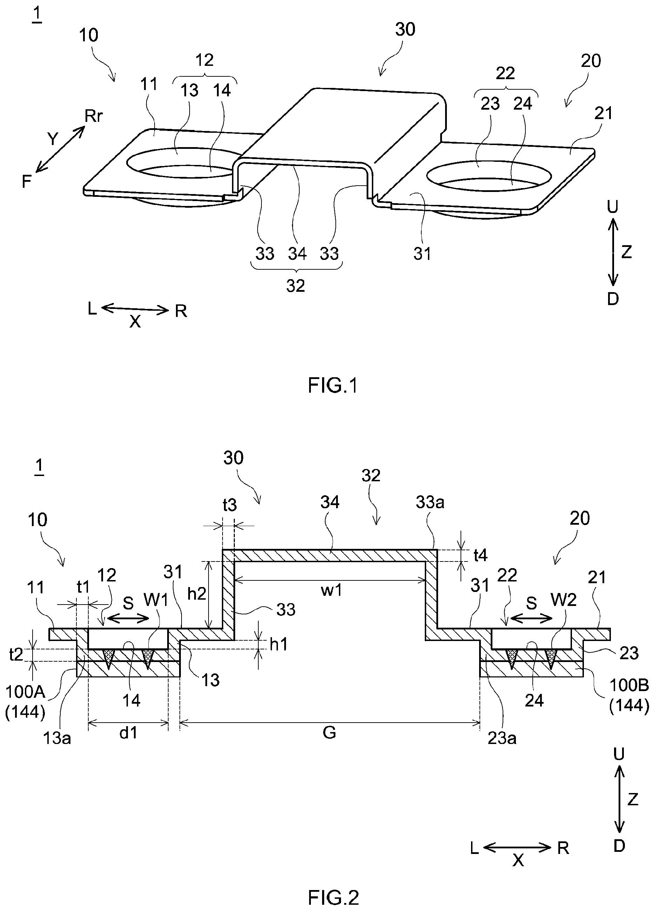

Below, while referring to FIG. 1 and FIG. 2, one embodiment of a herein disclosed bus bar will be described. FIG. 1 is a perspective view that schematically shows the bus bar in accordance with a first embodiment. FIG. 2 is a cross section view that schematically shows a joint with the bus bar shown in FIG. 1 and a terminal part of an electric storage device. Incidentally, reference signs L, R, F, Rr, U, and D in figures respectively represent left, right, front, rear, up, and down. In addition, reference signs X, Y, and Z in figures respectively represent a width direction, a depth direction, and a height direction of the bus bar. However, these are merely directions defined for convenience sake of explanation, and are not to restrict a disposed aspect of the herein disclosed bus bar. Additionally, for convenience sake of explanation, in FIG. 2, regarding a first electric storage device 100A and a second electric storage device 100B, only the terminal part 144 is shown and the other portions are omitted.

As shown in FIG. 1 and FIG. 2, the bus bar 1 in accordance with the present embodiment includes a first joint area 10 that is joined to a terminal part 144 of the first electric storage device 100A, a second joint area 20 that is joined to the terminal part 144 of the second electric storage device 100B different from the first electric storage device 100A, and a cross-linked area 30 that is configured to connect the first joint area 10 and the second joint area 20. Then, this bus bar 1 is provided with buffering parts 12, 22 at the first joint area 10 and the second joint area 20, while the buffering parts are configured to absorb a stress S caused by a fluctuation of an interval G between the first joint area 10 and the second joint area 20. By doing this, it is possible to mitigate the stress on joint part W1, W2 with the bus bar 1 and the terminal part 144. Below, the bus bar 1 configured as described above will be explained particularly.

### (1) Whole configuration

As shown in FIG. 2, the bus bar 1 in accordance with the present embodiment is a conductive member that is configured to connect the terminal parts 144 of 2 electric storage devices (the first electric storage device 100A and the second electric storage device 100B). As a material of this bus bar 1, it is enough to have an electrically conductive property being at a predetermined level or more, and it is possible without particular restriction to use a conventionally known electrically conducting material. As one example of the material of the bus bar 1 described above, it is possible to use a metal material, such as aluminum, copper, iron, zinc, silver, and nickel. In addition, the material of the bus bar 1 might be an alloy of these metals. The bus bar 1 might be a clad material in which plural layers consisting of different metal materials are laminated. Incidentally, in consideration of a joint property with the terminal part 144 of the electric storage device, it is preferable that the bus bar 1 is configured with a metal material which is the same kind as the terminal part 144. For example, on the terminal part 144 at a positive electrode side of the electric storage device, it is possible to use aluminum, or the like. In that case, it is preferable that the bus bar 1 is configured with the aluminum or the aluminum alloy.

Then, the bus bar 1 in accordance with the present embodiment includes the first joint area 10, the second joint area 20, and the cross-linked area 30. In particular, the bus bar 1 shown in FIG. 1 is a long plate-shaped member that is configured to extend along a width direction X. Then, on this bus bar 1, from a left side L to a right side R in the width direction X, the first joint area 10, the cross-linked area 30, and the second joint area 20 are arranged in this order. Below, each of the areas will be described.

### (2) First joint area 10

The first joint area 10 is an area that is joined to the terminal part 144 of the first electric storage device 100A. As shown in FIG. 1, the first joint area 10 is formed on an end part at one (a left side L) in the width direction X of the bus bar 1. Then, as shown in FIG. 2, one part (a later-described contact part 14) of the first joint area 10 is joined to the terminal part 144 of the first electric storage device 100A. For a joint with this first joint area 10 and the terminal part 144, it is possible to use a conventionally known joining process (laser welding, resistance welding, ultrasonic join, or the like). By doing this, it is possible to form the joint part W1 that is configured to straddle the first joint area 10 (the contact part 14) and the terminal part 144. Incidentally, as the illustration is omitted, the joint part W1 is a joint part formed to have a ring shape in a plane view.

Here, the bus bar 1 in accordance with the present embodiment is provided with a buffering part 12 on the first joint area 10, while the buffering part is configured to absorb the stress S caused by the fluctuation of the interval G between the first joint area 10 and the second joint area 20. By doing this, it is possible to suppress the stress S applied onto the joint part W1. Below, an example of a structure of the buffering part 12 will be described.

At first, the first joint area 10 includes a joint base part that is formed in a plate shape. Below, the joint base part of the first joint area 10 is referred to as "first base part 11". Then, the buffering part 12 in the present embodiment is configured with a step protruding from the first base part 11. In particular, the step-shaped buffering part 12 is configured to protrude from the first base part 11 toward the terminal part 144 of the first electric storage device 100A (in other words, to a downward D in the height direction Z). This step-shaped buffering part 12 is deformed when the stress S along the width direction X is applied, and thus it is possible to suppress the stress S from being directly applied to the joint part W1.

In further particular, the step-shaped buffering part 12 includes a protruding part 13 that is configured to protrude from the first base part 11 to the downward D, and the contact part 14 that is provided at a tip end (a lower end) 13a of the protruding part 13 and that is configured to come into contact with the terminal part 144. This contact part 14 is a plate-shaped member that is configured to extend along a plane direction (the width direction X and the depth direction Y). The joint part W1 at the first joint area 10 side extends in the height direction Z to straddle this contact part 14 and the terminal part 144. In addition, the protruding part 13 extends in the height direction Z to connect the contact part 14 and the first base part 11. According to the buffering part 12 having the configuration described above, it is possible to in particular suitably mitigate the stress S applied to the joint part W1. In particular, it is as described below. At first, when the expansion and contraction is caused on the first electric storage device 100A or the second electric storage device 100B, the fluctuation occurs on the interval G between the first joint area 10 and the second joint area 20. By doing this, the stress S is applied on the first joint area 10 in the plane direction (the width direction X and the depth direction Y). However, the buffering part 12 in accordance with the present embodiment includes the protruding part 13 that is configured to extend in the height direction Z. This protruding part 13 is preferentially deformed when the stress S in the plane direction is applied, and thus it is possible to absorb this stress S. By doing this, with respect to the joint part W1 configured to extend in the height direction Z, it is possible to suppress the stress S along the width direction X from being applied.

Incidentally, it is preferable that a thickness of the protruding part 13 (a size of the protruding part 13 in the width direction X) t1 is thinner than a thickness of the contact part 14 (a size of the contact part 14 in the height direction Z) t2. By doing this, the protruding part 13 becomes easy to be further preferentially deformed, and thus it is possible to further suitably mitigate the stress S applied onto the joint part W1. In particular, if the thickness t2 of the contact part 14 is treated as 100%, the thickness t1 of the protruding part 13 is preferably equal to or less than 90%, further preferably equal to or less than 85%, furthermore preferably equal to or less than 80%, or in particular preferably equal to or less than 75%. By doing this, with respect to the stress S applied along the width direction X, the protruding part 13 becomes to be further easily deformed. On the other hand, the thickness t1 of the protruding part 13 with respect to the thickness t2 of the contact part 14 is preferably equal to or more than 45%, further preferably equal to or more than 50%, furthermore preferably equal to or more than 55%, or in particular preferably equal to or more than 60%. By doing this, it is possible to sufficiently secure a strength of the protruding part 13.

In addition, a particular numerical value of the thickness t2 of the contact part 14 is preferably equal to or more than 0.1 mm, further preferably equal to or more than 0.2 mm, furthermore preferably equal to or more than 0.3 mm, or in particular preferably equal to or more than 0.5 mm. By doing this, it is possible to sufficiently secure the strength of the contact part 14. On the other hand, the thickness t2 of the contact part 14 is preferably equal to or less than 3.5 mm, further preferably equal to or less than 3.0 mm, furthermore preferably equal to or less than 2.5 mm, or in particular preferably equal to or less than 2.0 mm. By doing this, it is possible to easily form the joint part W1 that is configured to straddle the contact part 14 and the terminal part 144.

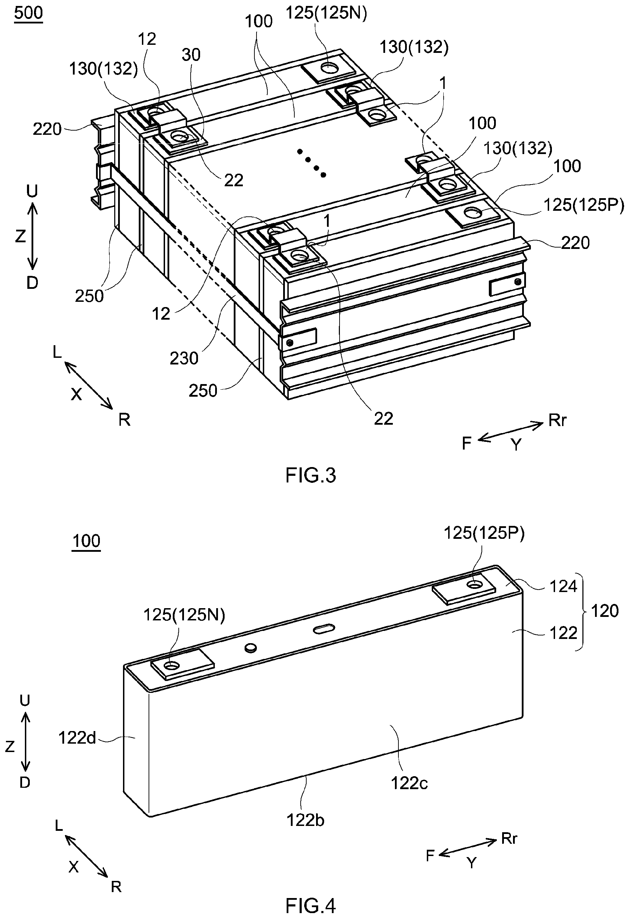

In addition, a height h1 of the protruding part 13 is preferably equal to or more than 1.0 mm, further preferably equal to or more than 1.5 mm, or in particular preferably equal to or more than 2.0 mm. By doing this, the protruding part 13 becomes to be easily deformed in response to the stress S in the plane direction, and thus it is possible to further suitably mitigate the stress S applied to the joint part W1. On the other hand, from a perspective of decreasing a total height of an electric storage unit 500 (see FIG. 3) when the bus bar 1 is attached, the height h1 of the protruding part 13 is preferably equal to or less than 3.0 mm, or further preferably equal to or less than 2.0 mm. By doing this, it is possible to enhance a loading efficiency when the electric storage unit is mounted on an electric product (an electric vehicle, or the like).

In addition, as shown in FIG. 1, the buffering part 12 in the present embodiment is a recessed part whose flat surface shape is an approximately circular. In particular, the buffering part 12 shown in FIG. 1 includes the protruding part 13 that is formed in a cylindrical shape and that is configured to protrude from the first base part 11 to the downward D. Then, the contact part 14 shown in FIG. 1 is a disk-shaped member that is configured to cover an opening part at the downward D of the cylindrical protruding part 13. This kind of buffering part 12 whose flat surface shape is approximately circular can allow the protruding part 13 to be deformed in various directions among the plane direction, and thus it is possible to furthermore properly mitigate the stress S applied onto the joint part W1.

In addition, an inner diameter d1 of the cylindrical protruding part 13 is preferably equal to or more than 10 mm, further preferably equal to or more than 15 mm, or in particular preferably equal to or more than 20 mm. By doing this, a welding area can be secured, and thus it is possible to enhance a reliability of the joint part W1. On the other hand, from a perspective of decreasing a size of the bus bar 1 so as to implement light weighting on the electric storage device, the inner diameter d1 of the protruding part 13 is preferably equal to or less than 25 mm, or further preferably equal to or less than 20 mm.

### (2) Second joint area 20

The second joint area 20 is an area that is joined to the terminal part 144 of the second electric storage device 100B different from the first electric storage device 100A. This second joint area 20 is formed on an end part at the other one (a right side R) in the width direction X of the bus bar 1. Then, similarly to the first joint area 10, at one part (the contact part 24) of the second joint area 20, the joint part W2 is formed that is configured to straddle the second joint area 20 and the terminal part 144.

Then, the bus bar 1 in accordance with the present embodiment is provided with the buffering part 22 on the second joint area 20, too. The buffering part 22 on this second joint area 20 has a structure approximately the same as the buffering part 12 of the first joint area 10 described above. In particular, the second joint area 20 includes the joint base part (a second base part 21) formed in a plate shape. Then, the buffering part 22 at the second joint area 20 side is also configured with the step protruding from the second base part 21 to the downward D. In further particular, the buffering part 22 includes a protruding part 23 that is configured to protrude from the second base part 21 to the downward D, and the contact part 24 that is provided at a lower end 23a of the protruding part 23 and that is configured to come into contact with the terminal part 144. The buffering part 22 having the configuration described above can suitably absorb the stress S applied in the plane direction, and thus it is possible to mitigate the stress S applied onto the joint part W2 of the second joint area 20.

Incidentally, as described above, the buffering part 22 of the second joint area 20 includes a structure approximately the same as the buffering part 12 of the first joint area 10. Therefore, a size of each member configuring the buffering part 22 of the second joint area 20 can be suitably set, based on a perspective similar to the buffering part 12 of the first joint area 10 described above. Accordingly, in the present specification, an overlapping explanation is omitted. However, a size of each of the buffering parts 12, 22 is to be suitably changed in accordance with a shape of the terminal part 144 of the joint object or the like, and is not always required to be completely the same. In other words, the buffering part 22 of the second joint area 20 might have a size different from the buffering part 12 of the first joint area 10.

### (3) Cross-linked area

The cross-linked area 30 is an area for connecting the first joint area 10 and the second joint area 20. By having this cross-linked area 30 that bridges the first joint area 10 and the second joint area 20, the first electric storage device 100A and the second electric storage device 100B are electrically connected.

Additionally, the cross-linked area 30 in the present embodiment includes a fluctuation absorbing part 32 that is configured to absorb the fluctuation of the interval G between the first joint area 10 and the second joint area 20. By doing this, it is possible to mitigate the stress applied onto the bus bar 1 itself. Particularly, the cross-linked area 30 in the present embodiment includes a cross-linked base part 31 formed in a plate shape. Then, the fluctuation absorbing part 32 is configured with the step protruding from the cross-linked base part 31. In further particular, the fluctuation absorbing part 32 includes a protruding part 33 that is configured to protrude from the cross-linked base part 31 to an upward U, and a coupling part 34 that is provided at a top end 33a of the protruding part 33 and that is formed in a flat plate shape. The fluctuation absorbing part 32 having the configuration described above can make the protruding part 33 be preferentially deformed when the interval G between the first joint area 10 and the second joint area 20 is fluctuated, and thus it is possible to mitigate the stress applied onto the bus bar 1 itself.

Incidentally, it is preferable that a thickness (a size in the width direction X) t3 of the protruding part 33 of the cross-linked area 30 is thinner than a thickness (a size in the height direction Z) t4 of the coupling part 34. By doing this, the protruding part 33 of the cross-linked area 30 becomes further easily deformed. Particularly, in a case where the thickness t4 of the coupling part 34 is treated as 100%, the thickness t3 of the protruding part 33 is preferably equal to or less than 90%, further preferably equal to or less than 85%, furthermore preferably equal to or less than 80%, or in particular preferably equal to or less than 75%. On the other hand, a rate of the thickness t3 of the protruding part 33 with respect to the thickness t4 of the coupling part 34 is preferably equal to or more than 50%, further preferably equal to or more than 55%, or in particular preferably equal to or more than 60%. By doing this, it is possible to sufficiently secure a strength of the protruding part 33.

Additionally, in particular, the thickness t4 of the coupling part 34 is preferably equal to or more than 0.1 mm, preferably equal to or more than 0.25 mm, or in particular preferably equal to or more than 0.5 mm. By doing this, it is possible to sufficiently secure the strength of the coupling part 34. On the other hand, an upper limit of the thickness t4 of the coupling part 34 is preferably equal to or less than 3.0 mm, further preferably equal to or less than 2.5 mm, or in particular preferably equal to or less than 2.0 mm. By doing this, the cross-linked area 30 (the protruding part 33, and the coupling part 34) becomes easily deformed, and thus it is possible to decrease the stress S applied onto the first joint area 10 or the second joint area 20.

In addition, a height h2 of the protruding part 33 of the cross-linked area 30 is preferably equal to or more than 1.0 mm, further preferably equal to or more than 1.5 mm, furthermore preferably equal to or more than 2.0 mm, or in particular preferably equal to or more than 2.5 mm. By doing this, the protruding part 33 of the cross-linked area 30 becomes easily deformed. On the other hand, the height h2 of the protruding part 33 of the cross-linked area 30 is preferably equal to or less than 5.0 mm, further preferably equal to or less than 4.0 mm, or in particular preferably equal to or less than 3.0 mm. By doing this, it is possible to decrease a total height of the electric storage unit 500 (see FIG. 3), and thus it is possible to enhance a loading efficiency when the electric storage unit 500 is mounted on the electric product (an electric vehicle, or the like).

Additionally, as shown in FIG. 1, the fluctuation absorbing part 32 in the present embodiment is a strip-shaped step that is formed over a whole area of the cross-linked area 30 in the depth direction Y In other words, the fluctuation absorbing part 32 includes a pair of protruding parts 33 that are configured to protrude from the whole area of the cross-linked base part 31 in the depth direction Y to the upward U. The pair of protruding parts 33 are configured to be opposed to each other in the width direction X. Then, to connect respective top ends 33a of the pair of protruding parts 33, the coupling part 34 is provided that is a plate-shaped member formed in an approximately rectangular shape. The fluctuation absorbing part 32 having the configuration described above can sufficiently absorb the large stress applied along the width direction X, and thus it is possible to suppress the stress from being applied onto the first joint area 10 or the second joint area 20.

In addition, the width size W1 of the coupling part 34, which is not particularly restricted, can be suitably adjusted in consideration of the sizes, disposed positions, or the like, of the first electric storage device 100A and the second electric storage device 100B. For example, a lower limit value of a width size W1 of the coupling part 34 might be equal to or more than 10 mm, might be equal to or more than 15 mm, or might be equal to or more than 20 mm. On the other hand, an upper limit value of the width size w1 of the coupling part 34 might be equal to or less than 70 mm, might be equal to or less than 60 mm, or might be equal to or less than 50 mm.

Above, the structure of the bus bar 1 in accordance with the present embodiment has been explained. As described above, the bus bar 1 having the configuration described above includes the buffering part 12, 22 that is configured to absorb the stress S caused by the fluctuation of the interval G between the first joint area 10 and the second joint area 20. By doing this, it is possible to suppress the stress S from being applied onto the joint part W1, W2 formed with the bus bar 1 and the terminal part 144.

### 2. Configuration of electric storage unit

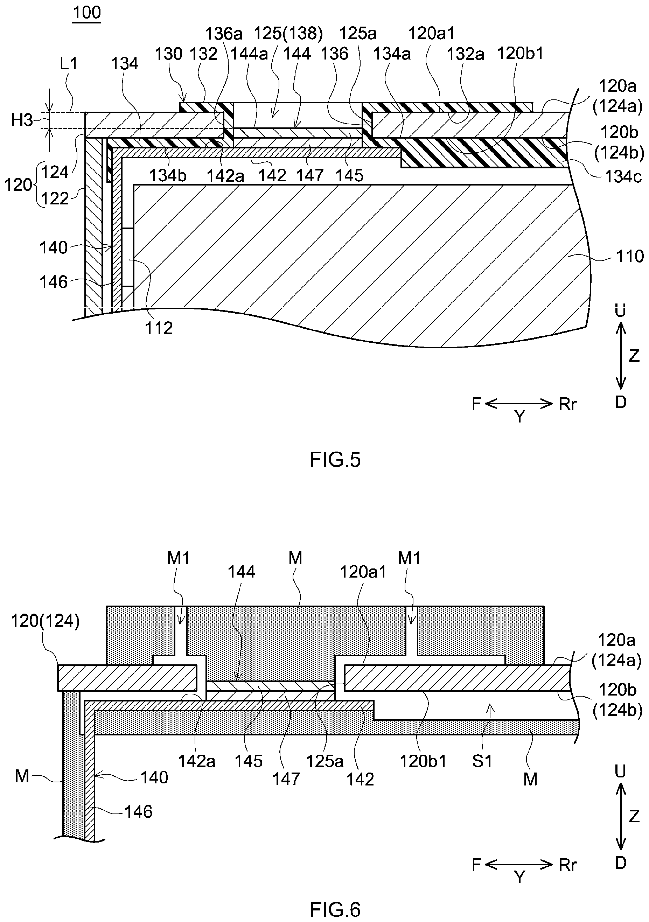

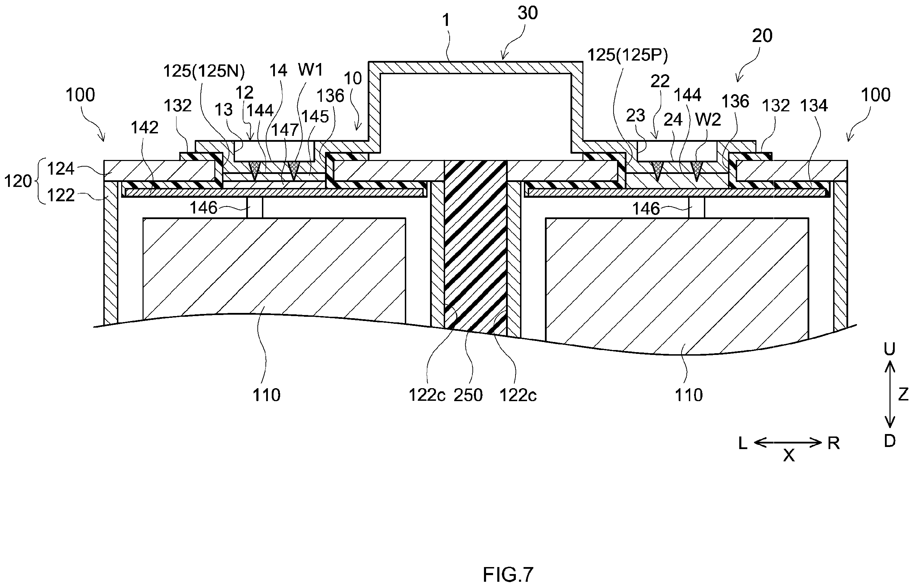

Next, the electric storage unit 500, in which the bus bar 1 having the above described configuration is used, will be described. FIG. 3 is a perspective view that schematically shows the electric storage unit in accordance with the first embodiment. FIG. 4 is a perspective view that schematically shows the electric storage device shown in FIG. 3. FIG. 5 is an enlarged cross section view that schematically shows a structure of the electric storage device shown in FIG. 4 at a vicinity of a terminal attachment hole. FIG. 6 is an enlarged cross section view that is to explain a procedure for manufacturing an insulating material shown in FIG. 5. FIG. 7 is an enlarged cross section view that schematically shows a connection structure of the electric storage unit shown in FIG. 3.

### (1) Electric storage device 100

The electric storage unit 500 shown in FIG. 3 includes plural electric storage devices 100. In particular, regarding this electric storage unit 500, the electric storage device 100 formed in a flat square shape is used. Then, the plural electric storage devices 100 are aligned along the width direction X to make the flat surfaces be opposed to each other. Incidentally, a number of the electric storage devices 100 included in the electric storage unit 500 is not particularly specified and can be suitably changed in accordance with a purpose of the electric storage unit 500 (a requested electric power, a standard, or the like, of the electric product planned to be used).

In addition, as shown in FIG. 4 and FIG. 5, this electric storage device 100 includes an electrode assembly 110, a case 120, an insulating material 130, and a current collector 140. Below, an example of the structure of the electric storage device 100 will be described.

### (1-1) Electrode assembly 110

The electrode assembly 110 is a power generating element of the electric storage device 100. The electric storage device 100 shown in FIG. 5 includes one electrode assembly 110. However, a number of the electrode bodies, which is not particularly restricted, might be plural. In addition, as the detailed illustration is omitted, the electrode assembly 110 includes a positive electrode plate, a negative electrode plate, and a separator. The positive electrode plate includes a positive electrode substrate that is an electrically conductive metal foil (an aluminum foil, or the like), and includes a positive electrode active material layer that is imparted on a surface of the positive electrode substrate. On the other hand, the negative electrode plate includes a negative electrode substrate that is an electrically conductive metal foil (a copper foil, or the like), and includes a negative electrode active material layer that is imparted on a surface of the negative electrode substrate. Then, the separator is an insulation sheet disposed between the positive electrode plate and the negative electrode plate. Incidentally, as a material of each member (the positive electrode plate, the negative electrode plate, the separator, or the like) configuring the electrode assembly 110, it is possible without particular restriction to use a material capable of being used on a general electric storage device, and a detailed explanation of it is omitted because it is not to restrict the herein disclosed technique.

In addition, the particular structure of the electrode assembly 110 is not specifically restricted. For example, the electrode assembly 110 might be a wound electrode assembly formed by winding a laminate body that includes the positive electrode plate, the negative electrode plate, and the separator. In addition, the electrode assembly 110 might be a laminate type electrode assembly on which plural positive electrode plates, plural negative electrode plates, and plural separators are respectively laminated. However, even in a case where any one of structures is applied, connecting tabs 112 are formed at both side edges of the electrode assembly 110 in the depth direction Y. One of the connecting tabs 112 is a positive electrode tab that is electrically connected to the positive electrode plate. This positive electrode tab is configured, for example, by bundling the positive electrode substrates which are not coated with the positive electrode active material layer. In addition, the other one of the connecting tabs 112 is a negative electrode tab that is electrically connected to the negative electrode plate. This negative electrode tab is configured by bundling the negative electrode substrates which are not coated with the negative electrode active material layer. Although details would be described later, these connecting tabs 112 are electrically connected to the current collector 140.

### (1-2) Case 120

The case 120 is a container that is configured to accommodate the electrode assembly 110 and that includes the terminal attachment hole 125. In particular, the case 120 is a flat box-shaped container that includes an internal space. Then, the electrode assembly 110 is accommodated in the internal space of the case 120. Incidentally, as the illustration is omitted, an electrolyte is also accommodated in the case 120. As the electrolyte, it is possible, without particular restriction, to use one capable of being used for the general electric storage device, it is not to restrict the herein disclosed technique, and thus a detailed explanation of it is omitted.

In addition, the case 120 includes a case main body 122 and a sealing plate 124. The case main body 122 is a box-shaped body having an upper surface opening. As shown in FIG. 4, the case main body 122 includes a bottom part 122b that is a long rectangular plate-shaped member, includes a pair of first side walls 122c that extend from long sides (sides along the depth direction Y) of the bottom part 122b to an upward D, and includes a pair of second side walls 122d that extend from short sides (sides along the width direction X) of the bottom part 122b to the upward D. Then, on an upper surface of the case main body 122, an upper surface opening is formed that is surrounded by respective top ends of first side walls 122c and second side walls 122d. On the other hand, the sealing plate 124 is a plate-shaped member that is formed to be rectangular and to cover the upper surface opening of the case main body 122. In particular, as shown in FIG. 5, the sealing plate 124 is fit into the upper surface opening of the case main body 122. Then, a boundary between the case main body 122 and the sealing plate 124 is joined by a laser welding, or the like. Incidentally, it is preferable that the case 120 (the case main body 122 and the sealing plate 124) is a metal member having a strength equal to or more than a predetermined level. As one example of a material of the case 120, it is possible to use a metal material, such as aluminum and aluminum alloy.

In addition, as described above, the terminal attachment hole 125 is formed on the case 120. This terminal attachment hole 125 is a penetration hole that is configured to penetrate the case 120. This terminal attachment hole 125 becomes an opening part for forming an electrically conductive passage that is configured to reach from the electrode assembly 110 inside the case 120 to an outside of the case 120. As shown in FIG. 4, the terminal attachment hole 125 is an opening part that has a circular shape in a plane view. However, the flat surface shape of the terminal attachment hole, which is not particularly restricted, might be a square shape. In addition, on the electric storage device 100 shown by FIG. 4, two terminal attachment holes 125 are formed on the sealing plate 124 of the case 120. In particular, the terminal attachment holes 125 are formed respectively on both ends of the sealing plate 124 in the depth direction Y. Then, one of the terminal attachment holes 125 functions as a positive electrode terminal attachment hole 125P that is configured to form the electrically conductive passage with respective to the positive electrode of the electrode assembly 110. In addition, the other one of the terminal attachment holes 125 functions as a negative electrode terminal attachment hole 125N that is configured to form the electrically conductive passage with respect to the negative electrode of the electrode assembly 110. Below, explanation would be performed while a structure of a periphery of the negative electrode terminal attachment hole 125N is used as an example.

### (1-3) Insulating material 130

The insulating material 130 is configured to continuously cover the circumferential wall 125a of the terminal attachment hole 125 and circumferential edge part 120a1, 120b1 of the terminal attachment hole 125 in a circumferential direction and to be joined to the circumferential edge part 120a1, 120b1 of the terminal attachment hole 125. This insulating material 130 is a member for inhibiting conduction to the case 120. In particular, to the inside of the case 120, the current collector 140 is attached for forming the electrically conductive passage from the electrode assembly 110 to the outside of the case 120. In addition, as shown in FIG. 3, the bus bar 1 is attached to the outside of the case 120. By disposing the insulating material 130 between these conductive member and case 120, it is possible to inhibit the conduction to the case 120. Incidentally, the insulating material 130 is configured with an insulating resin, such as polypropylene resin, polyphenylene sulfide resin, polyamide resin, polyacetal resin, and polyimide resin. In addition, the insulating material 130 includes an opening part 138 that is configured to penetrate this insulating material 130. This insulating material 130 is molded to make this opening part 138 and the terminal attachment hole 125 be overlapped. In other words, the insulating material 130 is arranged not to cover the terminal attachment hole 125 of the case 120.

Incidentally, the insulating material 130 shown in FIG. 5 is manufactured by insertion molding. In this insertion molding, at first, as shown in FIG. 6, the current collector 140 and a mold M are attached to the sealing plate 124. At that time, a positional relation of respective members is adjusted to generate a cavity S1 whose shape corresponds to the insulating material 130 planned to be manufactured. Next, through an injection hole M1 of the mold M, an inside of the cavity S1 is filled with a resin material. Then, by curing this resin material, the insulating material 130 whose shape corresponds to the cavity S1 is manufactured. By manufacturing the insulating material 130 with insertion molding as described above, the sealing plate 124 and the current collector 140 are integrated via the insulating material 130. By doing this, the insulating material 130 continuously covers the circumferential wall 125a of the terminal attachment hole 125 and the circumferential edge part 120a1, 120b1 of the terminal attachment hole 125 in the circumferential direction so as to be joined to the circumferential edge part 120a1, 120b1 of the terminal attachment hole 125. Then, the insulating material 130 after the insertion molding includes an outside insulating part 132, an inside insulating part 134, and a hole inside insulating part 136. Below, a particular shape of each portion will be described.

The insulating material 130 includes the outside insulating part 132 that is joined to the circumferential edge part 120a1 of the terminal attachment hole 125 on the outer surface 120a of the case 120. This outside insulating part 132 is a member configured to inhibit the conduction of the bus bar 1 and the case 120. In particular, the outside insulating part 132 is a plate-shaped portion arranged along the outer surface 120a (the upper surface 124a of the sealing plate 124) of the case 120. Then, a lower surface 132a of the outside insulating part 132 is joined to the outer surface 120a of the case 120 by insertion molding. As shown in FIG. 7, by providing the outside insulating part 132, it is possible to inhibit the bus bar 1 from coming into contact with the case 120 (the sealing plate 124). Incidentally, a thickness of the outside insulating part 132 is preferably equal to or more than 0.5 mm, further preferably equal to or more than 1.0 mm, or in particular preferably equal to or more than 2.0 mm. By doing this, it is possible to further suitably inhibit the conduction of the bus bar 1 and the case 120. On the other hand, the thickness of the outside insulating part 132 is preferably equal to or less than 4.0 mm, or further preferably equal to or less than 3.0 mm. By doing this, a height size of the electric storage device 100 can be further decreased, and thus it is possible to further enhance the loading efficiency of the electric storage device regarding the electric product.

In addition, the insulating material 130 includes the inside insulating part 134 that is joined to the circumferential edge part 120b1 of the terminal attachment hole 125 on the inner surface 120b of the case 120. This inside insulating part 134 is a member that is configured to inhibit the conduction of the later described current collector 140 and the case 120. In particular, the inside insulating part 134 is a plate-shaped portion disposed between the inner surface 120b (the lower surface 124b of the sealing plate 124) of the case 120 and the joint part 142 of the current collector 140. Then, the upper surface 134a of the inside insulating part 134 is joined to the inner surface 120b of the case 120 by the insertion molding. Incidentally, the thickness of the inside insulating part 134 is preferably equal to or more than 0.1 mm, further preferably equal to or more than 0.3 mm, or in particular preferably equal to or more than 0.5 mm. By doing this, it is possible to further suitably inhibit the conduction of the current collector 140 and the sealing plate 124. On the other hand, the thickness of the inside insulating part 134 is preferably equal to or less than 2.0 mm, or further preferably equal to or less than 1.0 mm. By doing this, an accommodation space of the electrode assembly 110 inside the case 120 becomes larger, and thus it is possible to contribute in enhancing a performance of the electric storage device 100.

Then, the insulating material 130 includes the hole inside insulating part 136 that is joined to the circumferential wall 125a of the terminal attachment hole 125. Although details are described later, regarding this electric storage unit 500, the buffering part 12, 22 of the bus bar 1 is inserted into the inside of the terminal attachment hole 125, and thus the contact part 14, 24 of the bus bar 1 and the terminal part 144 are joined. The hole inside insulating part 136 is configured to inhibit the buffering part 12, 22 inserted into the terminal attachment hole 125 from directly coming into contact with the case 120 (the sealing plate 124). In particular, the hole inside insulating part 136 is a cylindrical portion that extends along a height direction Z. This hole inside insulating part 136 is arranged at the inside of the terminal attachment hole 125 of the case 120. Then, an outer periphery 136a of the hole inside insulating part 136 is joined to the circumferential wall 125a of the terminal attachment hole 125. Additionally, regarding the insulating material 130, the outside insulating part 132 and the inside insulating part 134 are continuous through the hole inside insulating part 136. In other words, the outside insulating part 132, the inside insulating part 134, and the hole inside insulating part 136 are integrally molded. Incidentally, the thickness of the hole inside insulating part 136 is preferably equal to or more than 0.5 mm, further preferably equal to or more than 1.0 mm, or in particular preferably equal to or more than 2.0 mm. By doing this, it is possible to inhibit a breakage of the hole inside insulating part 136 caused by friction or heat at the time when the buffering part 12, 22 is inserted. On the other hand, the thickness of the hole inside insulating part 136 is preferably equal to or less than 4.0 mm, or further preferably equal to or less than 3.0 mm. By doing this, the size of the terminal attachment hole 125 is sufficiently secured, and thus inserting the buffering part 12, 22 becomes easy.

In addition, the insulating material 130 includes a protruding part 134c that is configured to protrude from a part (a portion at an inner side in the depth direction Y) of the inside insulating part 134 to a downward D. By doing this, it is possible to restrict the up and down movement of the electrode assembly 110 inside the case 120. As this result, it is possible to inhibit contact of the electrode assembly 110 and the sealing plate 124, breakage of the connecting tab 112, or the like. Incidentally, the thickness (a protruding amount) of the protruding part 134c is preferably equal to or more than 2.0 mm, or further preferably equal to or more than 3.0 mm. By doing this, it is possible to further suitably restrict the up and down movement of the electrode assembly 110. On the other hand, the thickness of the protruding part 134c is preferably equal to or less than 5.0 mm, or further preferably equal to or less than 4.0 mm. By doing this, it is possible to sufficiently secure the accommodation space of the electrode assembly 110 inside the case 120.

Incidentally, as the illustration is omitted, it is preferable that a rough surface processing has been performed on a surface of the metal member (the sealing plate 124, and the current collector 140) coming into contact with the insulating material 130. In particular, portions on which the rough surface processing has been performed are the circumferential edge part 120a1 of the terminal attachment hole 125 on the outer surface 120a of the case 120, the circumferential edge part 120b1 of the terminal attachment hole 125 on the inner surface 120b of the case 120, the circumferential wall 125a of the terminal attachment hole 125, and a surface of the current collector 140 (an upper surface 142a of the joint part 142) joined to the insulating material 130. By doing this, the resin material enters into a concave and convex part of the surface of each metal member when the insertion molding is performed. As this result, an anchor effect is generated, and thus it is possible to further firmly join the insulating material 130 and the metal member. Incidentally, it is enough for the rough surface processing to be performed on at least one point of each surface described above. Even in that case, it is possible to suitably enhance a joint strength of the insulating material 130 and the metal member. In addition, this rough surface processing is not to restrict the herein disclosed technique. In other words, even in a case where the rough surface processing is not performed, it is possible by the insertion molding to sufficiently integrate the insulating material 130 and the metal member.

### (1-4) Current collector 140

The current collector 140 is a conductive member that is electrically connected to the electrode assembly 110 at the inside of the case 120. In particular, the current collector 140 includes the inside electrical collector part 146 that is configured to extend along the height direction Z. This inside electrical collector part 146 is a plate-shaped portion that is connected to the connecting tab 112 of the electrode assembly 110. Incidentally, it is preferable that the inside electrical collector part 146 is configured with a metal material being the same kind as the connecting tab 112 which is a connecting object. For example, as described above, the negative electrode tab is configured with the negative electrode substrate that is the copper foil. In that case, it is preferable that the inside electrical collector part 146 is configured with a copper type material (a copper, a copper alloy, or the like). By doing this, it is possible to firmly connect the current collector 140 and the electrode assembly 110 at a low resistance.

In addition, the current collector 140 is arranged to cover the terminal attachment hole 125 via the insulating material 130. The current collector 140 is joined to the insulating material 130. In addition, the current collector 140 includes the terminal part 144. The terminal part 144 is exposed to the outer side of the case 120 through the terminal attachment hole 125. The terminal part 144 can be electrically connected to the bus bar 1. Below, the current collector having the configuration described above would be particularly explained.

At first, the current collector 140 includes the joint part 142 that is a plate-shaped member being joined to the insulating material 130. This joint part 142 is joined to a lower surface 134b of the inside insulating part 134 to cover the terminal attachment hole 125 at the inside of the case 120. In further particular, the joint part 142 is molded by folding and bending a top end of the inside electrical collector part 146 to be opposed to the sealing plate 124. By doing this, the joint part 142 is opposed to the inner surface 120b of the case 120, so as to sandwich the inside insulating part 134. Then, the upper surface 142a of the joint part 142 is joined to the lower surface 134b of the inside insulating part 134 by the insertion molding. As this result, the lower end part of the terminal attachment hole 125 is covered by the joint part 142.

The terminal part 144 is exposed to the outer side of the case 120 through the terminal attachment hole 125. By doing this, the bus bar 1 and the terminal part 144 can be electrically connected. In particular, regarding the structure shown in FIG. 5, the top end of the terminal attachment hole 125 is opened. As this result, a part (the terminal part 144) of the current collector 140 is exposed to the outer side of the case 120. By doing this, it is possible to insert the buffering part 12, 22 of the bus bar 1 from the outer side of the case 120 into the terminal attachment hole 125 (see FIG. 7). Then, in a state where the contact part 14, 24 of the bus bar 1 comes into contact with the terminal part 144, a joint processing, such as laser welding, is performed. By doing this, the joint part W1, W2 configured to straddle the contact part 14, 24 and the terminal part 144 is formed, and thus it is possible to electrically connect the bus bar 1 and the current collector 140.

In addition, the terminal part 144 of the electric storage device 100 shown in FIG. 5 is positioned inward more than the outer surface 120a of the case 120. In other words, as shown in FIG. 5, the upper surface 144a of the terminal part 144 is arranged at a downward D side more than an outer shape line L1 being along the outer surface 120a of the case 120. By doing this, it is possible to inhibit one part of the current collector 140 from protruding to the outside of the case 120. In addition, regarding this electric storage device 100, the terminal attachment hole 125 is sealed by the insulating material 130 and the current collector 140 (the joint part 142 and the terminal part 144). By doing this, it is possible to inhibit outflow of the electrolytic solution, invasion of a foreign substance, or the like. As described above, according to the electric storage device 100 having the configuration shown in FIG. 5, it is possible even without providing the outside connecting part to implement forming the electrically conductive passage toward the outside of the case 120 and to implement hermetically sealing the inside of the case 120. In other words, according to the configuration shown in FIG. 5, it is possible to delete the conductive member protruding to the outside of the case 120, and thus it is possible to implement decreasing the height size of the electric storage device 100. As this result, it is possible to enhance the loading efficiency of the electric storage device 100 of the electric product.

Incidentally, the terminal part 144 shown in FIG. 5 is a terminal part that is formed in a convex shape and that is inserted into the terminal attachment hole 125 from the inner side of the case 120. By doing this, a position of the upper surface 144a of the terminal part 144 in the terminal attachment hole 125 is made to rise, and thus it becomes easy to connect the terminal part 144 and the bus bar 1 (in other words, insertion from the upward U to the buffering part 12, 22). In addition, by inserting the convex-shaped terminal part 144 from the downward D of the terminal attachment hole 125, movement of the current collector 140 in the horizontal direction (the depth direction Y and the width direction X) is restricted. By doing this, it is also possible to suppress peel-off of a joint interface of the joint part 142 and the inside insulating part 134. Incidentally, as the position of the upper surface 144a of the terminal part 144 in the terminal attachment hole 125 is made to rise further, connecting the terminal part 144 and the bus bar 1 tends to become easier. From a perspective described above, a distance H3 from the outer surface 120a of the case 120 to the upper surface 144a of the terminal part 144 is preferably equal to or less than 2.0 mm, further preferably equal to or less than 1.0 mm, or furthermore preferably equal to or less than 0.5 mm. In addition, the upper surface 144a of the terminal part 144 might be at a height approximately similar to the outer surface 120a of the case 120 (in other words, the distance H3 is 0 mm). In that case, connecting the terminal part 144 and the bus bar 1 furthermore becomes easier.

In addition, as described above, the current collector 140 shown in FIG. 5 includes the joint part 142 that is a plate-shaped member joined to the insulating material 130. At that time, the convex-shaped terminal part 144 shown in FIG. 5 is a columnar member that is joined to the upper surface 142a of the joint part 142. By doing this, it is possible to sufficiently secure the thickness of the terminal part 144. As this result, it is possible to secure a suitable welding depth when the joint part W1, W2 is formed. Additionally, in a case where this kind of configuration is applied, it is also possible to freely select a material of the terminal part 144, without being affected by materials of the other portions (the joint part 142 and the inside electrical collector part 146).

For example, while shown in FIG. 5, it is possible as the terminal part 144 to use a clad material including a first layer 147 and a second layer 145. The first layer 147 of this terminal part 144 is joined to the upper surface 142a of the joint part 142, and is a layer configured with the same kind of metal as the joint part 142. By doing this, it is possible to firmly join the terminal part 144 and the joint part 142. On the other hand, the second layer 145 is exposed to the outer side of the case 120 through the terminal attachment hole 125, and is a layer configured with a metal different from the first layer 147. By doing this, it is possible to arrange the metal, which is easily connected to the bus bar 1, on the upper surface 144a of the terminal part 144. For example, regarding the current collector 140 at the negative electrode side, in consideration of a connection property with the negative electrode tab, a copper type material is used on the inside electrical collector part 146 and the joint part 142. On the other hand, regarding the current collector at the positive electrode side, in consideration of the connection property with the positive electrode tab, an aluminum type material is used. At that time, regarding the bus bar 1 configured to connect the current collector at the positive electrode side and the current collector at the negative electrode side, in consideration of the connection property with the terminal part 144 at the positive electrode side, an aluminum type material is often used. In that case, it is good regarding the current collector 140 at the negative electrode side that the first layer 147 of the terminal part 144 is configured with the copper and the second layer 145 is configured with the aluminum. By doing this, it is possible to form the joint interface with the copper and the copper between the terminal part 144 and the joint part 142, and additionally to form the joint interface with the aluminum and the aluminum between the terminal part 144 and the bus bar 1. As this result, it is possible to form the electrically conductive passage from the electrode assembly 110 to the bus bar 1 which is strong at the low resistance.

Above, an example of the electric storage device 100 used on the electric storage unit 500 has been explained. As described above, the electric storage device 100 having the configuration shown in FIG. 5 does not include the conductive member (the terminal part 144) protruding to the outside of the case 120, and have the height size being decreased. By doing this, it is possible to enhance the loading efficiency of the electric storage device 100 on the electric product. Incidentally, regarding the electric storage unit 500 in accordance with the present embodiment, it is not required that all of the plural electric storage devices 100 have the above described configuration. For example, in a case where the electric storage unit is mounted on the electric product, only a part of the plural electric storage devices does interfere with another part, and thus there might be a reason for having no choice but to reduce the height size of the whole electric storage unit. In that case, it is good that the above described configuration is applied only to the electric storage device which interferes with another part. By doing this, it is possible to enhance the loading efficiency of the electric storage device.

### (2) Restricting member

Next, the electric storage unit 500 shown in FIG. 3 includes a restricting member that is configured to restrict the plural electric storage devices 100. In particular, at both outer sides in an aligned direction (the width direction X) of the electric storage unit 500, a pair of end plates 220 are arranged. The pair of end plates 220 are cross-linked by a beam material for restriction 230. By doing this, it is possible to add restriction pressure along the aligned direction onto each of the electric storage devices 100. In addition, between one electric storage device 100 and another electric storage device, which are respectively aligned adjacent to each other, a resin-made buffering member 250 is arranged. By doing this, it is possible to uniform the restriction pressure applied onto the electric storage device 100.

### (3) Bus bar

Then, the electric storage unit 500 in accordance with the present embodiment uses the bus bar 1 having the above described configuration. This bus bar 1 is configured to electrically connect the plural electric storage devices 100. In particular, regarding the electric storage unit 500 shown in FIG. 3, the plural electric storage devices 100 are aligned to make the positive electrode terminal attachment hole 125P of one of the electric storage devices 100 and the negative electrode terminal attachment hole 125N of the other one of the electric storage device 100 be arranged adjacent to each other. Then, the bus bar 1 is connected to the terminal part 144 being present at the inside of each of the pair of adjacent terminal attachment holes 125

Here, the bus bar 1 in the present embodiment includes step-shaped buffering parts 12, 22 that are configured to protrude to the downward D (see FIG. 1 and FIG. 2). As described above, each of these buffering parts 12, 22 is inserted into the terminal attachment hole 125 from an outer side of the case 120. Then, the contact part 14, 24 being a bottom surface of the buffering part 12, 22 and the terminal part 144 are joined. By doing this, even when the terminal part 144 is arranged at the inward (the downward D) more than the outer surface 120a of the case 120, it is possible to easily connect the terminal part 144 and the bus bar 1.

Incidentally, in a case where the buffering part 12, 22 is inserted into the terminal attachment hole 125, it is preferable that an inner size of the terminal attachment hole 125 and an outer size of the buffering part 12, 22 are set to be approximately similar. By doing this, an outer periphery wall of the protruding part 13, 23 and an inner periphery wall of the hole inside insulating part 136 come into contact with each other, it is possible to restrict movement (vibration, or the like) of the contact part 14, 24 in the plane direction. As this result, it is possible to further suitably inhibit the stress S in the plane direction from being applied onto the joint part W1, W2 of the contact part 14, 24 and the terminal part 144.

### <Another embodiment>

Above, one embodiment of the herein disclosed technique has been explained. However, the herein disclosed technique is not to be restricted to the above described embodiment. Below, another embodiment of the herein disclosed technique will be described.

### 1. Buffering part including groove part

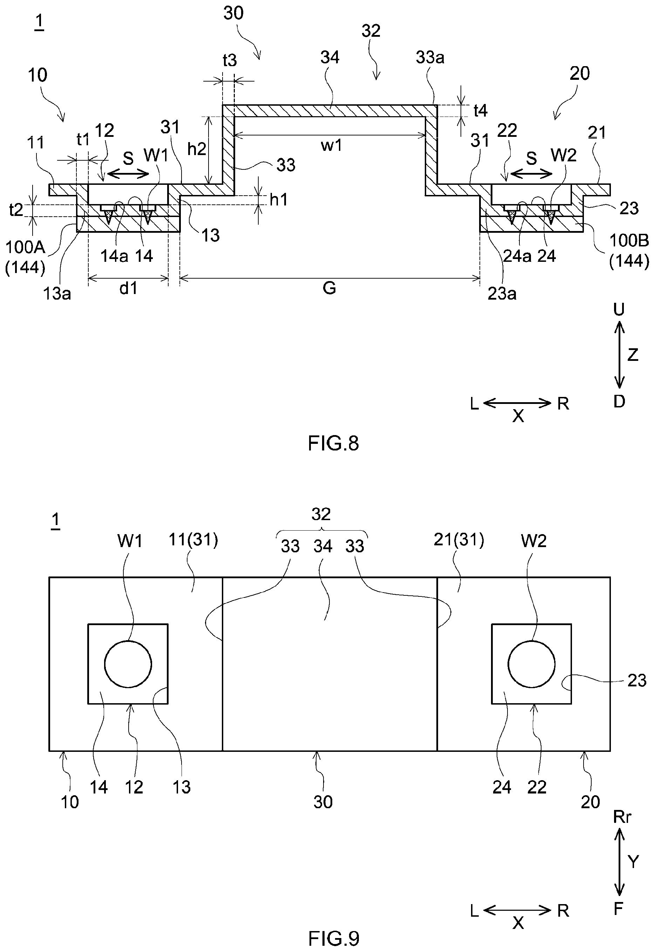

As shown in FIG. 2, the buffering part 12, 22 in the first embodiment includes the contact part 14, 24 whose upper surface is flat. However, as shown in FIG. 8, on the upper surface of the contact part 14, 24, a groove part 14a, 24a might be formed. This groove part 14a, 24a is a ring-shaped groove part in a plane view. A portion on which this groove part 14a, 24a is formed has a thickness becoming thinner than the other areas, and thus it becomes easy to form the joint part W1, W2 that is configured to penetrate the contact part 14, 24. Additionally, in a case where the groove part 14a, 24a is formed, it becomes easy to form the joint part W1, W2 even if the other portions are made to be thicker. Thus, it is possible to contribute in enhancing a whole strength of the bus bar 1.

### 2. Flat surface shape of buffering part

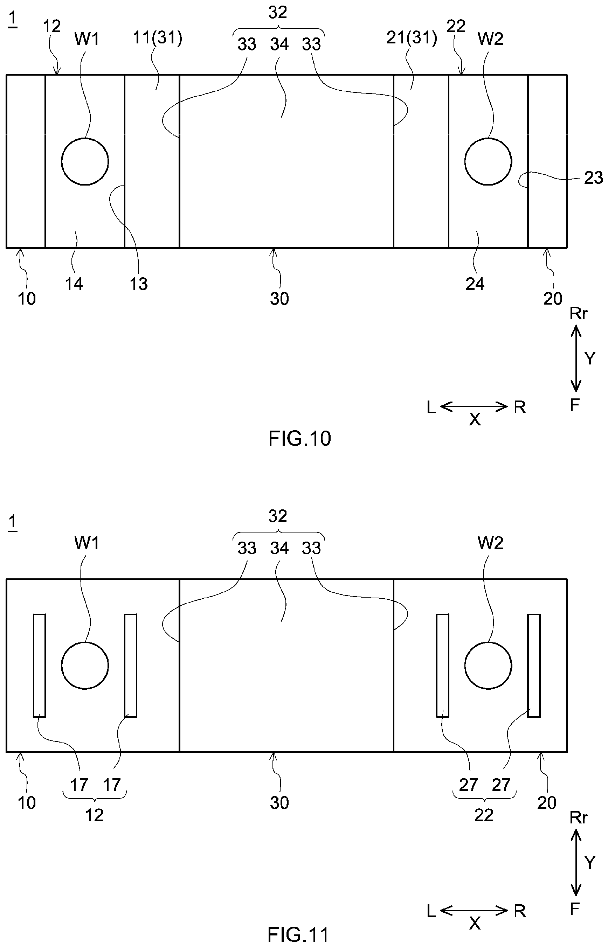

As shown in FIG. 1, regarding the first embodiment, the buffering part 12, 22 whose flat surface shape is approximately circular is provided. However, the flat surface shape of the buffering part, which is not particularly restricted, could be various shapes being applied. For example, as shown in FIG. 9, the bus bar 1 might include the buffering part 12, 22 whose flat surface shape is approximately rectangular. Even in that case, it is possible to properly mitigate the stresses respectively along the width direction X and the depth direction Y. In addition, as shown in FIG. 10, the bus bar 1 might include buffering part 12, 22 that has a strip-like shape, in a plane view, configured to extend over a whole area in the depth direction Y Even in that case, it is possible to mitigate the stress along the width direction X. As described above, regarding the stress S caused by the fluctuation of the interval G between the first joint area 10 and the second joint area 20, a stress along the width direction X is a main component, and thus it is possible to sufficiently mitigate even with the strip-like shaped buffering part 12, 22 shown in FIG. 10.

### 3. Buffering part other than step shape

Additionally, in any of the above described embodiments, the step-like shaped buffering part 12, 22 is formed that includes the protruding part 13, 23 and the contact part 14, 24 (see FIGs. 1, 9, and 10). However, it is enough for the buffering part to be able to absorb the stress caused by the fluctuation of the interval between the first joint area and the second joint area, and the buffering part is not restricted to the step-like shaped buffering part. For example, on the bus bar 1 shown in FIG. 11, the pair of opening parts 17, 27 configured to extend in the depth direction Y are formed. Then, on this bus bar 1, the joint part W1, W2 is formed between the pair of opening parts 17, 27. Regarding the bus bar 1 having the configuration described above, when the stress S along the width direction X is caused, the bus bar 1 is deformed so as to collapse the opening parts 17, 27. By doing this, it is possible to sufficiently absorb the stress S applied along the width direction X. In other words, the buffering part on the herein disclosed bus bar, which is not restricted to the step-like shaped buffering part described above, might be configured by the opening parts 17, 27 as shown in FIG. 11.

### 4. Number of joint areas including buffering part

In addition, as shown in FIG. 1 and FIG. 2, the bus bar 1 in accordance with the first embodiment is provided with the buffering parts 12, 22 at both of the first joint area 10 and the second joint area 20. However, the position at which the buffering part is formed might be at only one of the first joint area and the second joint area. Even in that case, on the joint area where the buffering part is formed, it is possible to inhibit a large stress from being applied onto the joint part. Particularly, as shown in FIG. 3, the terminal parts 144 of the electric storage devices 100 arranged at both ends in the aligned direction (the width direction X) are not connected to the adjacent electric storage device 100. Then, this opened terminal part 144 is, as a total plus terminal (or a total minus terminal), connected to an external equipment (a motor, or the like). It is enough, regarding a bus bar used at this connecting part, to form the buffering part only on the joint area joined to the total plus terminal (or the total minus terminal). By doing this, it is possible to suppress the stress from being applied onto the joint part of the terminal part and the bus bar.

### 5. Structure of cross-linked area

In addition, regarding the bus bar 1 in accordance with the first embodiment, the fluctuation absorbing part 32 is provided on the cross-linked area 30 (see FIG. 1 and FIG. 2). However, regarding the bus bar disclosed herein, the fluctuation absorbing part might not be provided on the cross-linked area. As described above, if the buffering part 12, 22 is provided on at least one of the first joint area 10 and the second joint area 20, it is possible to mitigate the stress applied onto the joint part W1, W2 of the terminal part 144 and the bus bar 1.

### 6. Structure of terminal part of electric storage device

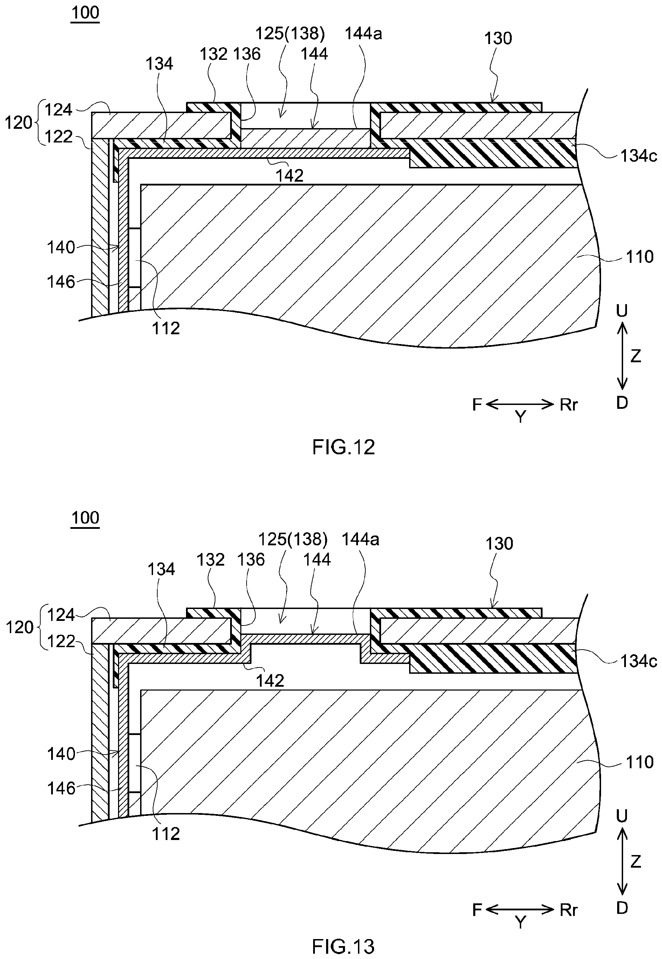

In addition, as described above, the herein disclosed electric storage unit is not restricted to a form using the electric storage device 100 shown in FIG. 4 and FIG. 5. Particularly, even if the structure shown in FIG. 4 and FIG. 5 is not applied, it is possible by arranging the terminal part at the inward more than the case to enhance the loading efficiency of the electric storage device. For example, the terminal part 144 of the electric storage device 100 having the structure shown in FIG. 5 is a columnar clad material that includes the first layer 147 and the second layer 145. However, the terminal part 144 is not restricted to the columnar clad material. For example, the terminal part 144 might be a columnar member that is configured with a single metal material (see FIG. 12). Even in a case where the above described configuration is applied, it is possible to enhance the loading efficiency of the electric storage device 100 if the upper surface 144a of the terminal part 144 is arranged at the inward (the downward D) more than the outer surface 120a of the case 120.

Incidentally, the terminal part 144 configured with the single metal material can be in particular suitably applied in a case where the joint part 142 and the bus bar 1 are configured with the same material. For example, regarding the current collector 140 at the positive electrode side, in consideration of the connection property with the positive electrode tab (the aluminum foil), the aluminum type material is used on the inside electrical collector part 146 and the joint part 142. On the other hand, as described above, the aluminum type material is used even on the bus bar 1 used when the electric storage unit 500 is constructed. In a case of having the above described configuration, even if the clad material is not used on the terminal part 144, it is possible to construct the electrically conductive passage from the electrode assembly 110 to the bus bar 1 with the aluminum type material, and thus it is possible to form the electrically conductive passage that is strong at the low resistance.

Additionally, in the first embodiment, the columnar terminal part 144 is joined to the upper surface 142a of the joint part 142 (see FIG. 5). However, the convex-shaped terminal part 144 is not restricted to the configuration described above. For example, in a case where the joint part 142 of the current collector 140 is the plate-shaped member, it is possible by folding and bending the joint part 142 to form the convex-shaped terminal part 144 (see FIG. 13). This convex-shaped terminal part 144 can be molded by performing a pressing process on the plate-shaped joint part 142. Even in a case where the terminal part 144 having the configuration described above is inserted into the terminal attachment hole 125, connecting the terminal part 144 and the bus bar 1 becomes easier, and movement of the current collector 140 in the horizontal direction can be restricted. In addition, according to the present embodiment, the number of parts of the current collector 140 can be reduced, and thus it is possible to contribute in decreasing a material cost.

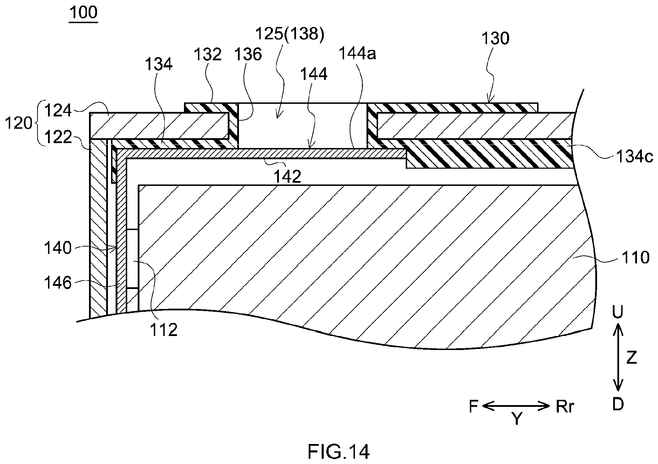

Additionally, in the first embodiment, the terminal part 144 of the convex shape is inserted into the terminal attachment hole 125. However, the current collector of the electric storage device might not include the convex-shaped terminal part. For example, as shown in FIG. 14, it might configure a flat surface on which the joint part 142 and the terminal part 144 are continued. Even in a case where this kind of configuration is applied, it is possible by the insulating material 130 and the terminal part 144 to seal the terminal attachment hole 125. Then, even in a case where the configuration described above is applied, the terminal part 144 is exposed to the outer side of the case 120 through the terminal attachment hole 125, and thus it is possible to electrically connect the bus bar 1 and the current collector 140. Then, even in that case, the terminal part 144 is arranged at the inward (the downward D) more than the outer surface 120a of the case 120, and thus it is possible to enhance the loading efficiency of the electric storage device on the electric product.

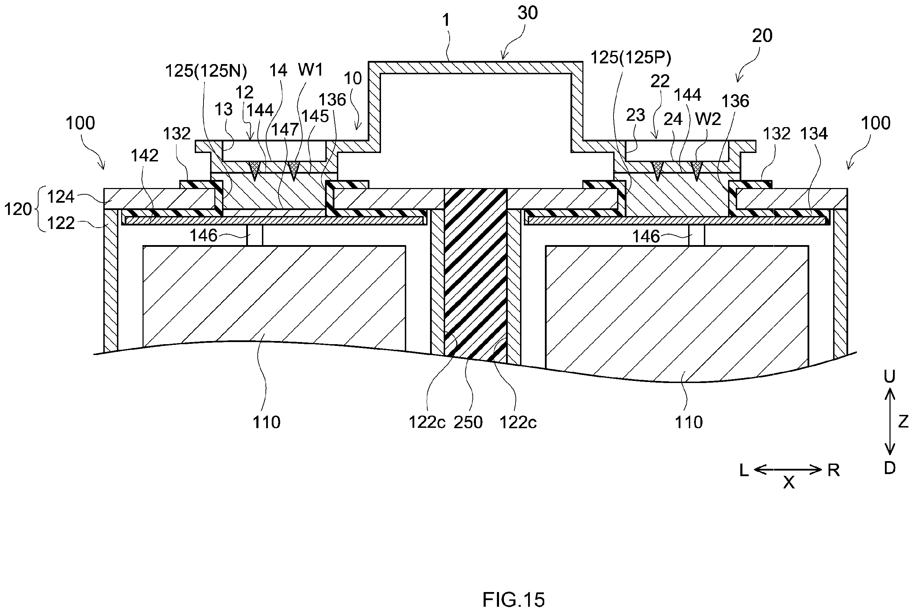

Additionally, the electric storage unit 500 in accordance with the first embodiment uses the electric storage device 100 in which the terminal part 144 is arranged at the inward of the case 120. Then, in the first embodiment, the buffering part 12, 22 of the bus bar 1 is inserted into the terminal attachment hole 125. However, the structure of the herein disclosed bus bar is not affected by the structure of the terminal part of the electric storage device. In other words, the structure of the electric storage device 100 is not to restrict the herein disclosed technique. For example, as shown by FIG. 15, even in a case where the electric storage device 100 including the terminal part 144 protruding to the outside of the case 120 is used, it is possible to properly join the buffering part 12, 22 of the bus bar 1 and the terminal part 144. Then, even in a case where the configuration described above is used, the buffering part 12, 22 of the bus bar 1 can absorb the stress applied along the width direction X, and thus it is possible to mitigate the stress applied onto the joint part W1, W2.

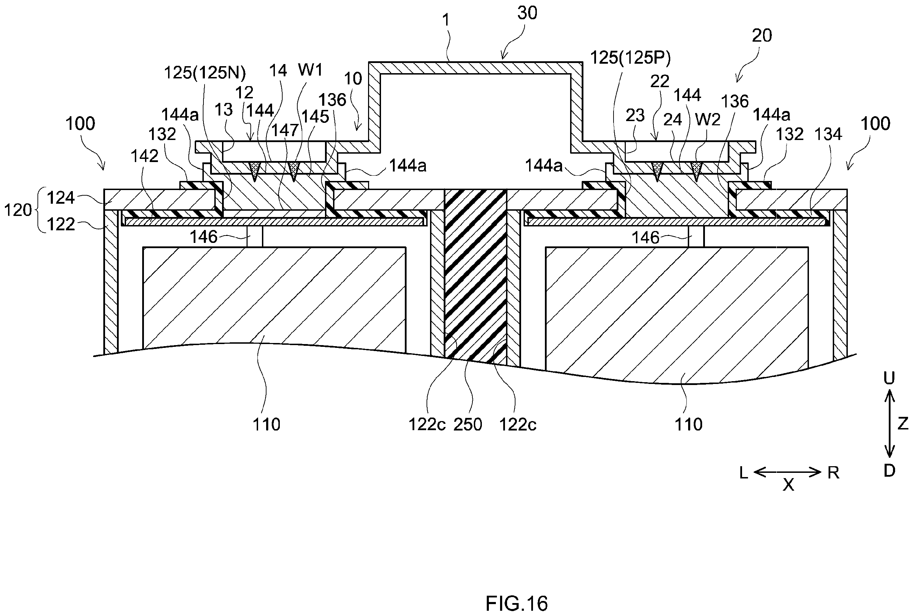

In addition, regarding the first embodiment, an outer wall of the protruding part 13, 23 of the bus bar 1 is made to come into contact with the inner wall of the hole inside insulating part 136 of the insulating material 130 (see FIG. 7). By doing this, the movement of the contact part 14, 24 in the plane direction can be restricted, and thus it is possible to further suitably suppress the stress from being applied on the joint part W1, W2. However, a means for restricting the movement of the contact part 14, 24 in the plane direction is not restricted to the above described structure. For example, as shown in FIG. 16, if the electric storage device 100 including the terminal part 144 protruding to the outside of the case 120 is used, it is good to provide a movement restricting part 144a that is disposed on an outer periphery edge part of the terminal part 144 and that is configured to protrude to the upward U. Then, to make the outer wall of the protruding part 13, 23 of the bus bar 1 and the movement restricting part 144a come into contact with each other, the bus bar 1 and the terminal part 144 are joined. By doing this, it is possible to properly restrict the movement of the contact part 14, 24 in the plane direction. In other words, to restrict the movement of the contact part 14, 24 in the plane direction, it is good to make the outer wall of the protruding part 13, 23 of the bus bar 1 come into contact with one part of the electric storage device 500.

Above, the herein disclosed technique has been explained in detail. However, these are merely illustrations, and are not to restrict the scope of claims. The technique recited in claims contains matters in which the above-illustrated specific example is variously deformed or changed. In other words, the herein disclosed technique semantically covers forms recited in below-described item 1 to item 10.

### [Item 1]

A bus bar, comprising:
a first j oint area for j oining to a terminal part of a first electric storage device;
a second joint area for joining to a terminal part of a second electric storage device different from the first electric storage device; and
a cross-linked area connecting the first j oint area and the second j oint area, wherein on at least one of the first joint area and the second joint area, a buffering part is provided that is configured to absorb a stress caused by a fluctuation of an interval between the first j oint area and the second j oint area.

### [Item 2]

The bus bar recited in item 1, wherein
at least one of the first joint area and the second joint area comprises a joint base part formed in a plate shape, and
the buffering part is configured with a step protruding from the joint base part.

### [Item 3]

The bus bar recited in item 2, wherein
the buffering part comprises:
a protruding part protruding from the joint base part; and
a contact part that is provided at a tip end of the protruding part and that is configured to come into contact with the terminal part.

### [Item 4]

The bus bar recited in item 3, wherein
a thickness of the protruding part is thinner than a thickness of the contact part.

### [Item 5]

The bus bar recited in item 4, wherein
in a case where the thickness of the contact part is treated as 100%, the thickness of the protruding part is 50% to 90%.

### [Item 6]

The bus bar recited in any one of items 1 to 5, wherein
the buffering part is provided on both of the first joint area and the second joint area.

### [Item 7]

The bus bar recited in any one of items 1 to 6, wherein
the cross-linked area comprises a fluctuation absorbing part that is configured to absorb a fluctuation of an interval between the first joint area and the second joint area.

### [Item 8]

The bus bar recited in item 7, wherein
the cross-linked area comprises a cross-linked base part that is formed in a plate shape, and
the fluctuation absorbing part is configured with a step protruding from the cross-linked base part.

### [Item 9]

An electric storage unit, comprising:
plural electric storage devices; and
plural bus bars that are configured to electrically connect respective terminal parts of the plural electric storage devices, wherein
at least one of the plural bus bars is the bus bar recited in any one of items 1 to 8.

### [Item 10]

The electric storage unit recited in item 9, wherein
at least one of the plural electric storage devices comprises:
an electrode assembly;
a case that is configured to accommodate the electrode assembly and that comprises a terminal attachment hole;
an insulating material continuously covering a circumferential wall of the terminal attachment hole and a circumferential edge part of the terminal attachment hole in a circumferential direction, and joined to the circumferential edge part of the terminal attachment hole; and
a current collector electrically connected to the electrode assembly inside of the case, the current collector is arranged to cover the terminal attachment hole via the insulating material,
the current collector is joined to the insulating material,
the current collector comprises a terminal part that is exposed to an outer side of the case through the terminal attachment hole, and that is capable of being electrically connected to the bus bar,
the terminal part is positioned at an inward more than an outer surface of the case, the terminal attachment hole is sealed by the insulating material and the current collector, and
the buffering part of the bus bar is inserted from an outer side of the case into the terminal attachment hole, and is joined to the terminal part.

### [Reference signs list]

- 1: Bus bar
- 10: First j oint area
- 11: First base part
- 12: Buffering part
- 13: Protruding part
- 14: Contact part
- 17: Opening part
- 20: Second joint area
- 21: Second base part
- 22: Buffering part
- 23: Protruding part
- 24: Contact part
- 30: Cross-linked area
- 31: Cross-linked base part
- 32: Fluctuation absorbing part
- 33: Protruding part
- 34: Coupling part
- 100: Electric storage device
- 110: Electrode assembly
- 120: Case
- 122: Case main body
- 124: Sealing plate
- 125: Terminal attachment hole
- 130: Insulating material
- 140: Current collector
- 142: Joint part
- 144: Terminal part
- 500: Electric storage unit

## Claims

1. A bus bar (1), comprising:
a first joint area (10) for joining to a terminal part (144) of a first electric storage device (100A);
a second joint area (20) for joining to a terminal part (144) of a second electric storage device (100B) different from the first electric storage device (100A); and
a cross-linked area (30) connecting the first joint area (10) and the second joint area (20), wherein
on at least one of the first joint area (10) and the second joint area (20), a buffering part (22) is provided that is configured to absorb a stress caused by a fluctuation of an interval between the first joint area (10) and the second joint area (20).

2. The bus bar (1) according to claim 1, wherein
at least one of the first joint area (10) and the second joint area (20) comprises a joint base part (11, 21) formed in a plate shape, and
the buffering part (22) is configured with a step protruding from the joint base part (11,21).

3. The bus bar (1) according to claim 2, wherein
the buffering part (22) comprises:
a protruding part (13, 23) protruding from the joint base part (11, 21); and
a contact part (14, 24) that is provided at a tip end of the protruding part (13, 23) and that is configured to come into contact with the terminal part (144).

4. The bus bar (1) according to claim 3, wherein
a thickness of the protruding part (13, 23) is thinner than a thickness of the contact part (14, 24).

5. The bus bar (1) according to claim 4, wherein
in a case where the thickness of the contact part (14, 24) is treated as 100%, the thickness of the protruding part (13, 23) is 50% to 90%.

6. The bus bar (1) according to any one of claims 1 to 5, wherein
the buffering part (22) is provided on both of the first joint area (10) and the second joint area (20).

7. The bus bar (1) according to any one of claims 1 to 6, wherein
the cross-linked area (30) comprises a fluctuation absorbing part (32) that is configured to absorb a fluctuation of an interval between the first joint area (10) and the second joint area (20).

8. The bus bar (1) according to claim 7, wherein
the cross-linked area (30) comprises a cross-linked base part (31) that is formed in a plate shape, and
the fluctuation absorbing part (32) is configured with a step protruding from the cross-linked base part (31).

9. An electric storage unit (500), comprising:
plural electric storage devices (100); and
plural bus bars (1) that are configured to electrically connect respective terminal parts (144) of the plural electric storage devices (100), wherein
at least one of the plural bus bars (1) is the bus bar (1) according to any one of claims 1 to 8.

10. The electric storage unit (500) according to claim 9, wherein
at least one of the plural electric storage devices (100) comprises:
an electrode assembly (110);
a case (120) that is configured to accommodate the electrode assembly (110) and that comprises a terminal attachment hole (125);
an insulating material (130) continuously covering a circumferential wall of the terminal attachment hole (125) and a circumferential edge part of the terminal attachment hole (125) in a circumferential direction, and joined to the circumferential edge part of the terminal attachment hole (125); and
a current collector (140) electrically connected to the electrode assembly (110) inside of the case (120),
the current collector (140) is arranged to cover the terminal attachment hole (125) via the insulating material (130),
the current collector (140) is joined to the insulating material (130),
the current collector (140) comprises a terminal part (144) that is exposed to an outer side of the case (120) through the terminal attachment hole (125), and that is capable of being electrically connected to the bus bar (1),
the terminal part (144) is positioned at an inward more than an outer surface of the case (120), the terminal attachment hole (125) is sealed by the insulating material (130) and the current collector (140), and
the buffering part (22) of the bus bar (1) is inserted from an outer side of the case (120) into the terminal attachment hole (125), and is joined to the terminal part (144).
